(19) Europäisches Patentamt / European Patent Office / Office européen des brevets

(11) **EP 4 484 476 A1**

(12) **EUROPEAN PATENT APPLICATION**
published in accordance with Art. 153(4) EPC

(43) Date of publication:
01.01.2025 Bulletin 2025/01

(21) Application number: 23759563.2

(22) Date of filing: 25.01.2023

(51) International Patent Classification (IPC):
*C08J 5/18* (2006.01)   *B29C 55/12* (2006.01)
*B32B 15/085* (2006.01)   *H01G 4/32* (2006.01)

(52) Cooperative Patent Classification (CPC):
**B29C 55/12; B32B 15/08; B32B 15/085;
C08J 5/18; C08J 7/04; H01G 4/32**

(86) International application number:
**PCT/JP2023/002182**

(87) International publication number:
**WO 2023/162557 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 25.02.2022 JP 2022028328

(71) Applicant: Oji Holdings Corporation
Chuo-ku
Tokyo 104-0061 (JP)

(72) Inventors:
• **ISHIWATA, Tadakazu**
**Tokyo 104-0061 (JP)**
• **ISHIDA, Tatsuji**
**Tokyo 104-0061 (JP)**
• **YONEDA, Yoshihiko**
**Tokyo 104-0061 (JP)**

(74) Representative: **Müller-Boré & Partner
Patentanwälte PartG mbB
Friedenheimer Brücke 21
80639 München (DE)**

(54) **BIAXIALLY STRETCHED POLYPROPYLENE FILM, METALLIZED FILM, AND CAPACITOR**

(57) The present invention provides a biaxially stretched polypropylene film exhibiting a high dielectric breakdown strength even at high temperatures, and a metallized film using the biaxially stretched polypropylene film. The present invention provides a biaxially stretched polypropylene film, wherein an average value of ultrasonic wave propagation velocities in an omni-direction at room temperature measured by using an ultrasonic wave orientation tester is 1.60 Km/sec or more.

# EP 4 484 476 A1

**Description**

Technical Field

The present invention relates to a biaxially stretched polypropylene film, a metallized film, and a capacitor.

Background Art

Conventionally, a biaxially stretched polypropylene film is used for electrical appliances and the like, and with its excellent electrical properties such as voltage endurance, is used as a dielectric film for a capacitor.
A capacitor manufactured from the dielectric film for a capacitor as described above can be used for, for example, an inverter constituting a power control unit in a hybrid car, an electric car, or the like.
A biaxially stretched polypropylene film for producing such a capacitor needs to make a film thickness thinner due to the downsizing and high capacity of the capacitor in recent years, and requires to exhibit a high dielectric breakdown strength even if the thickness becomes thin.
For example, Patent Literature 1 discloses a polypropylene film, as a polypropylene film used for a capacitor, in which a polypropylene resin has a melting peak in a specific range.

Citation List

Patent Literature

PTL 1: Japanese Patent No. 42929923

Summary of Invention

Technical Problem

However, the polypropylene film described in Patent Literature 1 has a problem in terms of insufficient heat resistance.
The capacitor described above is used in an environment where the temperature rises in an engine room or in an environment where self-heating of the capacitor occurs, and thus is required to have high heat resistance at a high temperature of approximately 120°C (for example, 100°C to 125°C). That is, the capacitor requires to maintain the insulation properties and static capacitance without causing a short circuit even at high temperatures.
The biaxially stretched polypropylene film for producing such a capacitor requires to exhibit a high dielectric breakdown strength even at high temperatures.
Therefore, there is a demand for the development of a biaxially stretched polypropylene film exhibiting a high dielectric breakdown strength even at high temperatures and a metallized film using the biaxially stretched polypropylene film, and there is a demand for the development of a capacitor capable of maintaining the insulation properties and static capacitance even at high temperatures.
The present invention aims to provide a biaxially stretched polypropylene film exhibiting a high dielectric breakdown strength even at high temperatures, and a metallized film using the biaxially stretched polypropylene film. Additionally, the present invention aims to provide a capacitor capable of maintaining the insulation properties and static capacitance even at high temperatures.

Solution to Problem

As a result of intensive researches to solve the abovementioned problems, the present inventors have found that the abovementioned purposes can be achieved with a biaxially stretched polypropylene film, wherein an average value of ultrasonic wave propagation velocities in an omni-direction at room temperature measured by using an ultrasonic wave orientation tester is 1.60 Km/sec or more, and have completed the present invention.
That is, the present invention relates to a biaxially stretched polypropylene film, a metallized film, and a capacitor described below.

1. A biaxially stretched polypropylene film, wherein an average value of ultrasonic wave propagation velocities in an omni - direction at room temperature measured by using an ultrasonic wave orientation tester is 1.60 Km/sec or more.
2. The biaxially stretched polypropylene film according to aspect 1, wherein a maximum value (Vmax) of the ultrasonic wave propagation velocities in the omni-direction at room temperature measured by using the ultrasonic wave orientation tester is 2.40 Km/sec or more.

3. The biaxially stretched polypropylene film according to aspect 1 or 2, wherein a ratio (Vmax/Vmin) between the maximum value (Vmax) and a minimum value (Vmin) of the ultrasonic wave propagation velocities in the omni-direction at room temperature measured by using the ultrasonic wave orientation tester is 2.8 or more.

4. The biaxially stretched polypropylene film according to any one of aspects 1 to 3, wherein the biaxially stretched polypropylene film comprises a long-chain-branched polypropylene resin, and the long-chain-branched polypropylene resin has a melt tension of 9 g/cm$^3$ or more and 20 g/cm$^3$ or less at 230°C.

5. The biaxially stretched polypropylene film according to any one of aspects 1 to 3, wherein the biaxially stretched polypropylene film comprises a polypropylene resin and a long-chain-branched polypropylene resin, and the long-chain-branched polypropylene resin has a strain hardening parameter of 3 or more and less than 6.

6. The biaxially stretched polypropylene film according to any one of aspects 1 to 3, wherein the biaxially stretched polypropylene film comprises a polypropylene resin and a long-chain-branched polypropylene resin, and the long-chain-branched polypropylene resin has a melt flow rate at 230°C of 1 to 6 g/10 min.

7. The biaxially stretched polypropylene film according to any one of aspects 1 to 3, wherein a polypropylene resin constituting the biaxially stretched polypropylene film has a molecular weight distribution (Mw/Mn) between a weight-average molecular weight Mw and a number-average molecular weight Mn of 5.0 or more and 6.9 or less.

8. The biaxially stretched polypropylene film according to any one of aspects 1 to 3, wherein a polypropylene resin constituting the biaxially stretched polypropylene film has a Z average molecular weight Mz of 0.950 million or more and 1.500 million or less.

9. The biaxially stretched polypropylene film according to any one of aspects 1 to 3, wherein a polypropylene resin constituting the biaxially stretched polypropylene film has a weight fraction w, at a logarithmic molecular weight Log (M) = 4.0 in an integral molecular weight distribution curve, is 2.6% or more and 4.0% or less.

10. The biaxially stretched polypropylene film according to any one of aspects 1 to 9, used for a capacitor.

11. A metallized film having a metal layer on at least one surface of the biaxially stretched polypropylene film according to any one of aspects 1 to 10.

12. The metallized film according to aspect 11, having a thickness of 1.8 μm or more and 3.0 μm or less.

13. A capacitor containing the metallized film according to aspect 11 or 12.

Advantageous Effects of Invention

The biaxially stretched polypropylene film of the present invention can exhibit a high dielectric breakdown strength even at high temperatures. Additionally, the present invention can provide a metallized film using the biaxially stretched polypropylene film. Furthermore, a capacitor of the present invention can maintain the insulation properties and static capacitance even at high temperatures. Brief Description of Drawings

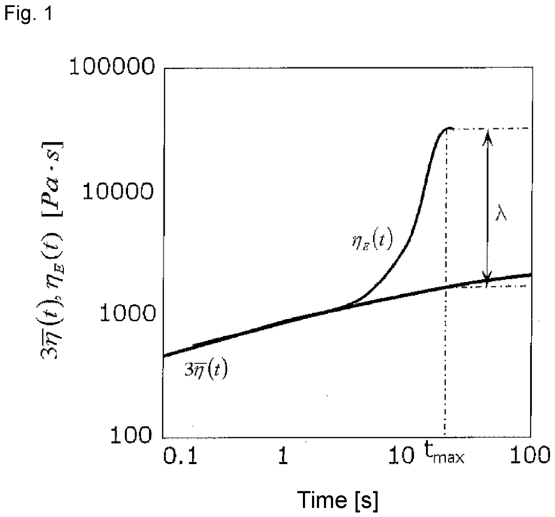

Fig. 1 is a conceptual diagram of a strain hardening parameter (λ).

Description of Embodiments

In the present specification, "to" in a numerical range means "or more" and "or less." That is, the notation "α to β" means "α or more and β or less," or "β or more and α or less," and includes α and β in the range thereof. In a case where a plurality of lower limit values and a plurality of upper limit values are described separately, an arbitrary lower limit value and an arbitrary upper limit value can be selected and connected with "to."

In the present specification, the terms "comprise" and "contain" include the concepts of "comprise," "contain," "essentially consist of," and "consist of."

In the present specification, the term "capacitor" includes the concepts of "capacitor," "capacitor element," and "film capacitor."

In the present specification, the directions of the biaxially stretched polypropylene film are as follows. First, the machine direction of the film is the same as the machine direction (hereinafter, also referred to as "MD direction"). The MD direction may be referred to as the length direction or the flow direction. Next, the lateral direction of the film is the same as the transverse direction (hereinafter, also referred to as "TD direction"). The TD direction may be referred to as the width direction.

1. Biaxially stretched polypropylene film

In the biaxially stretched polypropylene film of the present invention, an average value of the ultrasonic wave propagation velocities in an omni-direction at room temperature measured by using an ultrasonic wave orientation tester is 1.60 Km/sec or more. As an average value of the ultrasonic wave propagation velocities is 1.60 Km/sec or more, the biaxially stretched polypropylene film of the present invention can exhibit a high dielectric breakdown strength even at high temperatures. The explanation is given below.

The present inventor has found that, when the ultrasonic wave propagation velocity in the biaxially stretched polypropylene film increases, the electrical properties (voltage endurance) are improved. The ultrasonic wave propagation velocity V shows a relationship with the rigidity modulus G and the density $\rho$ as in the following formula (1).

$$G = \rho V^2 \quad (1)$$

That is, the abovementioned formula (1) shows that the ultrasonic wave propagation velocity in the biaxially stretched polypropylene film is in a balancing relationship with the rigidity modulus and the density of this biaxially stretched polypropylene film.

Although the effect of the present invention is not clear, it is assumed from the content of the abovementioned formula (1) that the ultrasonic wave propagation velocity is affected by the "entanglement effect" and "crystallization" of molecular chains of polypropylene constituting the biaxially stretched polypropylene film.

For example, it is conceivable to use branched polypropylene in order to promote the "entanglement" of molecular chains. Since the branched polypropylene has an effect similar to a crystal nucleating agent, it is assumed that the "crystallization" of polypropylene proceeds. However, since the excessive "crystallization" increases the density $\rho$, it is considered from the abovementioned formula (1) that the ultrasonic wave propagation velocity V decreases.

It is conceivable to use polypropylene having a specific molecular weight and a specific molecular weight distribution in order to promote the "entanglement." For example, since a component having an ultra high molecular weight which exhibits a specific Z average molecular weight promotes an "entanglement effect" of molecular chains of polypropylene, an average value of the ultrasonic wave propagation velocities in an omni-direction at room temperature becomes 1.60 Km/sec or more.

That is, since the ultrasonic wave propagation velocity in the biaxially stretched polypropylene film is in a balancing relationship with the rigidity modulus and the density of this biaxially stretched polypropylene film, it is assumed that, by using a biaxially stretched polypropylene film having an average value of the ultrasonic wave propagation velocities in an omni-direction at room temperature of 1.60 Km/sec or more as in the present invention, the "entanglement effect" and the "crystallization" of molecular chains of polypropylene constituting the biaxially stretched polypropylene film fall within an appropriate range, and this biaxially stretched polypropylene film can exhibit a high dielectric breakdown strength even at high temperatures.

As the biaxially stretched polypropylene film of the present invention shows the abovementioned effect, a high dielectric breakdown strength of 500 Vdc/um or more can be exhibited even at a high temperature of 125°C, for example. Also in a capacitor using this biaxially stretched polypropylene film as a dielectric, even when a high voltage of 400 Vdc/um or more is applied for a short time at a high temperature of 100°C or more, for example, the insulation properties and static capacitance can be maintained without causing a short circuit.

Hereinafter, the biaxially stretched polypropylene film of the present invention will be explained in detail.

In the biaxially stretched polypropylene film of the present invention, an average value of the ultrasonic wave propagation velocities in an omni-direction at room temperature measured by using an ultrasonic wave orientation tester is 1.60 Km/sec or more. When the average value falls below 1.60 Km/sec, the dielectric breakdown strength of the biaxially stretched polypropylene film at high temperatures (approximately 120°C, for example, 100°C to 125°C) decreases. The average value is preferably 1.63 Km/sec or more, and more preferably 1.65 Km/sec or more. The upper limit of the average value is not particularly limited, and is preferably 2.00 Km/sec or less, more preferably 1.90 Km/sec or less, and still more preferably 1.80 Km/sec or less. When the upper limit of the average value falls within the range, it is possible to suppress the decrease in crystallinity (decrease in density) of the biaxially stretched polypropylene film, and the heat resistance is further improved.

In the biaxially stretched polypropylene film of the present invention, the maximum value (Vmax) of the ultrasonic wave propagation velocities in an omni-direction at room temperature measured by using an ultrasonic wave orientation tester is preferably 2.40 Km/sec or more, and more preferably 2.45 Km/sec or more. The upper limit of the maximum value is not particularly limited, and is preferably 2.85 Km/sec or less, and more preferably 2.80 Km/sec or less. When the lower limit of the maximum value falls within the abovementioned range, the dielectric breakdown strength of the biaxially stretched polypropylene film at high temperatures is further improved. When the upper limit of the maximum value falls within the abovementioned range, it is possible to suppress the decrease in crystallinity (decrease in density) of the biaxially stretched polypropylene film, and the heat resistance is further improved.

In the biaxially stretched polypropylene film of the present invention, the minimum value (Vmin) of the ultrasonic wave propagation velocities in an omni-direction at room temperature measured by using an ultrasonic wave orientation tester is preferably 0.820 Km/sec or more, and more preferably 0.835 Km/sec or more. The upper limit of the minimum value is not particularly limited, and is preferably 1.000 Km/sec or less, and more preferably 0.950 Km/sec or less. When the lower limit of the minimum value falls within the abovementioned range, the dielectric breakdown strength of the biaxially stretched polypropylene film at high temperatures is further improved. When the upper limit of the minimum value falls within the abovementioned range, it is possible to suppress the decrease in crystallinity (decrease in density) of the biaxially stretched polypropylene film, and the heat resistance is further improved.

In the biaxially stretched polypropylene film of the present invention, the ratio (Vmax/Vmin) between the maximum value (Vmax) and the minimum value (Vmin) is preferably 2.80 or more, and more preferably 2.82 or more. The upper limit of Vmax/Vmin is preferably 3.50 or less, and more preferably 3.30 or less. When the lower limit of Vmax/Vmin falls within the abovementioned range, the dielectric breakdown strength of the biaxially stretched polypropylene film at high temperatures is further improved. When the upper limit of Vmax/Vmin falls within the abovementioned range, it is possible to achieve both the dielectric breakdown strength and the other physical properties of the biaxially stretched polypropylene film, whereby the dielectric breakdown strength can be improved while suppressing a decrease in heat resistance.

In the present specification, the measurement of the average value, the maximum value, and the minimum value of the ultrasonic wave propagation velocities in an omni-direction at room temperature measured by using the ultrasonic wave orientation tester follows a measurement method described in Examples described later. In this measurement method, the room temperature means 25°C$\pm$2°C, and the measurement is preferably performed at 25°C.

As for the thickness of the biaxially stretched polypropylene film, the upper limit is preferably 6.0 $\mu$m or less, more preferably 5.5 $\mu$m or less, still more preferably 3.5 $\mu$m or less, particularly preferably 3.0 $\mu$m or less, and most preferably 2.8 $\mu$m or less, from the viewpoint of enabling further facilitating the downsizing and increase in the capacity of the capacitor when being used for the capacitor. The lower limit is preferably 0.8 $\mu$m or more, more preferably 1.0 $\mu$m or more, still more preferably 1.8 $\mu$m or more, and particularly preferably 2.0 $\mu$m or more, from the viewpoint of the production. The method for measuring the thickness of the biaxially stretched polypropylene film in the present specification follows a method described in Examples.

The density of the biaxially stretched polypropylene film is not particularly limited, and is preferably 919 kg/m$^3$ or more and 930 kg/m$^3$ or less, from the viewpoint of facilitating the application to capacitors.

A polypropylene resin constituting the biaxially stretched polypropylene film of the present invention preferably has a molecular weight distribution (Mw/Mn) between a weight average molecular weight Mw and a number-average molecular weight Mn of 5.0 or more and 10.0 or less. The lower limit value of the molecular weight distribution is preferably 5.2 or more, more preferably 6.0 or more, and still more preferably 6.4 or more. The upper limit value of the molecular weight distribution is preferably 9.0 or less, and more preferably 8.6 or less. When the molecular weight distribution falls within the abovementioned range, the dielectric breakdown strength of the biaxially stretched polypropylene film at high temperatures is further improved, and the thermal shrinkage in the machine direction (MD) is suppressed.

Note that Mw, Mn, and Mw/Mn, which are properties of a polypropylene resin constituting the polypropylene resin, are the nature of the polypropylene resin in the biaxially stretched polypropylene film (after the biaxially stretched polypropylene film is formed), and are different from the nature of a polypropylene resin used as a raw material in producing the biaxially stretched polypropylene film.

The method for measuring the weight-average molecular weight Mw and the number-average molecular weight Mn of the polypropylene resin in the present specification follows a method described in Examples.

The polypropylene resin constituting the biaxially stretched polypropylene film of the present invention preferably has a Z average molecular weight Mz of 0.950 million or more and 1.500 million or less. The lower limit value of the Z average molecular weight is preferably 1.0 million or more, more preferably 1.050 million or more, and still more preferably 1.100 million or more. The upper limit value is preferably 1.400 million or less, more preferably 1.300 million or less, and still more preferably 1.200 million or less. When the Z average molecular weight falls within the abovementioned range, the dielectric breakdown strength of the biaxially stretched polypropylene film at high temperatures is further improved.

Note that the Z average molecular weight Mz, which is a property of a polypropylene resin constituting the polypropylene resin, is the nature of the polypropylene resin in the biaxially stretched polypropylene film (after the biaxially stretched polypropylene film is formed), and is different from the nature of a polypropylene resin used as a raw material in producing a biaxially stretched polypropylene film.

The method for measuring the Z average molecular weight of the polypropylene resin in the present specification follows a method described in Examples.

In the polypropylene resin constituting the biaxially stretched polypropylene film of the present invention, the weight fraction w, at the logarithmic molecular weight Log (M) = 4.0 in an integral molecular weight distribution curve, is preferably 2.6% or more and 4.0% or less. The lower limit value of the weight fraction w is preferably 2.8% or more, more preferably 3.0% or more, still more preferably 3.2% or more, and particularly preferably 3.4% or more. The upper limit value is preferably 3.9% or less. When the weight fraction w falls within the abovementioned range, the dielectric breakdown strength of the biaxially stretched polypropylene film at high temperatures is further improved.

Note that the weight fraction w, at the logarithmic molecular weight Log (M) = 4.0, which is a property of a polypropylene resin constituting the polypropylene resin, is the nature of the polypropylene resin in the biaxially stretched polypropylene film (after the biaxially stretched polypropylene film is formed), and is different from the nature of a polypropylene resin used as a raw material in producing a biaxially stretched polypropylene film.

The method for measuring the weight fraction w of the polypropylene resin in the present specification follows a method described in Examples.

The polypropylene resin constituting the biaxially stretched polypropylene film of the present invention preferably has a molecular weight distribution (Mw/Mn) of a weight-average molecular weight Mw and a number-average molecular weight Mn of 5.0 or more and 10.0 or less, a Z average molecular weight Mz of 0.950 million or more and 1.500 million or less, and a weight fraction w, at the logarithmic molecular weight Log (M) = 4.0 in an integral molecular weight distribution curve of 2.6% or more and 4.0% or less. When the polypropylene resin constituting the biaxially stretched polypropylene film of the present invention exhibits the abovementioned properties, the "entanglement effect" and the "crystallization" of the molecular chains of the polypropylene resin fall within appropriate ranges, and thus, this biaxially stretched polypropylene film can exhibit a high dielectric breakdown strength even at high temperatures.

The content of the polypropylene resin is preferably 90 mass% or more, more preferably 95 mass% or more, and still more preferably 97 mass% or more when the total amount of the resin contained in the biaxially stretched polypropylene film is regarded as 100 mass%. The upper limit of the content of the polypropylene resin is not particularly limited, and may be, for example, 100 mass% or approximately 98 mass% when the total amount of the resin contained in the biaxially stretched polypropylene film is regarded as 100 mass%.

The polypropylene resin is preferably a straight-chain polypropylene resin. When the polypropylene resin is a straight-chain polypropylene resin, the molecular weight distribution (Mw/Mn) which is a ratio of the weight-average molecular weight Mw to the number-average molecular weight Mn, the Z average molecular weight Mz, and the weight fraction w, at the logarithmic molecular weight Log (M) = 4.0 in an integral molecular weight distribution curve, can be easily adjusted to the abovementioned ranges, and thus, the average value, the maximum value (Vmax), the minimum value (Vmin), and (Vmax/Vmin) of the ultrasonic wave propagation velocities can be easily adjusted to the abovementioned ranges.

As the polypropylene resin, one kind of a polypropylene resin may be used alone or two or more kinds of polypropylene resins may be used in a mixed manner.

In a case where two or more kinds of polypropylene resins are contained in the biaxially stretched polypropylene film of the present invention, the polypropylene resin having the highest content is referred to as a "polypropylene resin A," a "polypropylene resin as a main component," or a "base resin" in the present specification. In a case where one kind of a polypropylene resin is contained in the biaxially stretched polypropylene film of the present invention, this polypropylene resin is also defined as a main component in the present specification, and is referred to as a "polypropylene resin A" or a "polypropylene resin as a main component." In a case where two or more kinds of polypropylene resins are contained in the biaxially stretched polypropylene film of the present invention, a polypropylene resin that differs from the polypropylene resin having the highest content, is referred to as a "polypropylene resin B" or a "blend resin" in the present specification.

When the biaxially stretched polypropylene film of the present invention contains two or more (particularly two) kinds of polypropylene resins, it is preferable to contain, for example, the following polypropylene resin B as a blend resin together with the polypropylene resin A. One kind of the polypropylene resins A may be regarded as a "base resin," and the other kind may be regarded as a "blend resin." A case where two kinds of polypropylene resins, i.e., a polypropylene resin A as a base resin and a polypropylene resin B as a blend resin, are used is illustratively described below.

Polypropylene resin A

In the biaxially stretched polypropylene film of the present invention, as the polypropylene resin A, crystalline polypropylene such as isotactic polypropylene and syndiotactic polypropylene can be used, for example. The polypropylene resin A is preferably a straight-chain polypropylene resin. When the polypropylene resin A is a straight-chain crystalline polypropylene resin, the molecular weight distribution (Mw/Mn) which is a ration of the weight-average molecular weight Mw to the number-average molecular weight Mn, the Z average molecular weight Mz, and the weight fraction w, at the logarithmic molecular weight Log (M) = 4.0 in an integral molecular weight distribution curve, of the polypropylene resin (mixed resin of the polypropylene resin A and the polypropylene resin B), can be easily adjusted to the abovementioned ranges, and thus, the average value, the maximum value (Vmax), the minimum value (Vmin), and (Vmax/Vmin) of the ultrasonic wave propagation velocities in the biaxially stretched polypropylene film of the present invention can be easily adjusted to the abovementioned ranges.

In the biaxially stretched polypropylene film of the present invention, the content of the polypropylene resin A preferably exceeds 50 mass%, is more preferably 55 mass% or more, still more preferably 60 mass% or more, particularly preferably 62 mass% or more when the total amount of the resin contained in the biaxially stretched polypropylene film is regarded as 100 mass%. The content of the polypropylene resin A preferably falls below 100 mass%, more preferably 95 mass% or less, still more preferably 90 mass% or less, particularly preferably 80 mass% or less, and most preferably 75 mass% or less when the total amount of the resin contained in the biaxially stretched polypropylene film is regarded as 100 mass%.

The weight-average molecular weight Mw of the polypropylene resin A is preferably 250,000 or more and 360,000 or less, more preferably 280,000 or more and 350,000 or less, still more preferably 300,000 or more and 350,000 or less, and particularly preferably 300,000 or more and less than 350,000. When the weight-average molecular weight Mw of the polypropylene resin A falls within the abovementioned range, the thickness of a cast sheet can be more easily controlled and the unevenness in thickness is less likely to occur in a production process of a biaxially stretched polypropylene film.

Note that the weight-average molecular weight Mw of the polypropylene resin A is a property of the polypropylene resin A as a raw material resin. The number-average molecular weight Mn, the Z average molecular weight Mz, the molecular weight distribution (Mw/Mn), the molecular weight distribution (Mz/Mn), the weight fraction w at the logarithmic molecular weight Log (M) = 4.0, the melt flow rate (MFRA) at 230°C, the mesopentad fraction ([mmmm]), and the heptane insoluble (HI) of the polypropylene resin A described later, are also properties of the polypropylene resin A as a raw material resin.

The number-average molecular weight Mn of the polypropylene resin A is preferably 30,000 or more and 54,000 or less, more preferably 33,000 or more and 52,000 or less, and still more preferably 33,000 or more and 47,000 or less. When the number-average molecular weight Mn of the polypropylene resin A falls within the abovementioned range, the heat resistance of the capacitor to be produced is further improved.

The Z average molecular weight Mz of the polypropylene resin A is preferably 1 million or more and 2 million or less, and more preferably 1.25 million or more and 1.8 million or less. When the Z average molecular weight Mz of the polypropylene resin A falls within the abovementioned range, the dielectric breakdown strength of the biaxially stretched polypropylene film at high temperatures is further improved.

The molecular weight distribution (Mw/Mn) of the polypropylene resin A is preferably 5.0 or more, more preferably 5.5 or more, still more preferably 6.0 or more, particularly preferably 7.0 or more, and most preferably 8.0 or more. The molecular weight distribution (Mw/Mn) of the polypropylene resin A is preferably 10.5 or less, more preferably 10.0 or less, still more preferably 9.5 or less. When Mw/Mn falls within the abovementioned range, the stretchability of the polypropylene film is further improved, whereby a thinner biaxially stretched polypropylene film can be produced.

The molecular weight distribution (Mz/Mn) of the polypropylene resin A is preferably 10 or more and 100 or less, more preferably 15 or more and 70 or less, and still more preferably 15 or more and 60 or less. When Mz/Mn falls within the abovementioned range, the stretchability of the polypropylene film is further improved, whereby a thinner biaxially stretched polypropylene film can be produced.

The weight fraction w, at the logarithmic molecular weight Log (M) = 4.0 in an integral molecular weight distribution curve, of the polypropylene resin A is preferably 3.8% or more, and more preferably 4.0% or more. The weight fraction w is preferably 6.0% or less, and more preferably 5.0% or less. When the weight fraction w of the polypropylene resin A falls within the abovementioned range, the weight fraction w after the polypropylene resin A and the polypropylene resin B are mixed, is easily adjusted to 2.6% or more and 4.0% or less due to the combination with the weight fraction w of the polypropylene resin B described later, whereby the dielectric breakdown strength of the biaxially stretched polypropylene film at high temperatures is further improved.

The melt flow rate (MFRA) of the polypropylene resin A at 230°C is preferably 3.0 g/10 min or more, and more preferably 3.5 g/10 min or more. The melt flow rate (MFRA) of the polypropylene resin A at 230°C is preferably 10.0 g/10 min or less, more preferably 8.0 g/10 min or less, still more preferably 6.0 g/10 min or less, and particularly preferably 5.0 g/10 min or less. When the melt flow rate of the polypropylene resin A at 230°C falls within the abovementioned range, the dielectric breakdown strength of the biaxially stretched polypropylene film at high temperatures is further improved.

The method for measuring the melt flow rate (MFR) of a resin at 230°C in the present specification follows a method described in Examples.

The mesopentad fraction ([mmmm]) of the polypropylene resin A is preferably 99.8% or less, more preferably 99.5% or less, and still more preferably 99.0% or less. The mesopentad fraction is preferably 94.0% or more, more preferably 94.5% or more, and still more preferably 95.0% or more. When the mesopentad fraction falls within the abovementioned range, the moderately high stereoregularity enhances the crystallinity of the polypropylene resin, the voltage endurance of the biaxially stretched polypropylene film at high temperatures is further improved, and the rate of solidification (crystallization) during cast sheet molding becomes moderate, whereby moderate stretchability can be exhibited.

The method for measuring the mesopentad fraction ([mmmm]) of the resin in the present specification follows a method described in Examples.

The heptane insoluble (HI) of the polypropylene resin A is preferably 97.0% or more and 98.5% or less. Note that a higher heptane insoluble indicates higher stereoregularity of the resin. When the heptane insoluble falls within the abovementioned range, the moderately high stereoregularity moderately enhances the crystallinity of the polypropylene resin in the polypropylene film, whereby the dielectric breakdown strength at high temperatures is improved. Furthermore, the rate of solidification (crystallization) becomes moderate at the time of cast sheet molding in a production process of the polypropylene film, whereby moderate stretchability is imparted.

The method for measuring the heptane insoluble (HI) of the resin in the present specification follows a method described in Examples.

Polypropylene resin B

In the biaxially stretched polypropylene film of the present invention, as the polypropylene resin B, crystalline polypropylene such as isotactic polypropylene and syndiotactic polypropylene can be listed, for example. The polypropylene resin B is preferably a straight-chain polypropylene resin. When the polypropylene resin B is a straight-chain crystalline polypropylene resin, the weight -average molecular weight Mw, the number-average molecular weight Mn, the molecular weight distribution (Mw/Mn), the Z average molecular weight Mz, and the weight fraction w, at the logarithmic molecular weight Log (M) = 4.0 in an integral molecular weight distribution curve, of the polypropylene resin (mixed resin of the polypropylene resin A and the polypropylene resin B), can be easily adjusted to the abovementioned ranges, and thus, the average value, the maximum value (Vmax), the minimum value (Vmin), and (Vmax/Vmin) of the ultrasonic wave propagation velocities in the biaxially stretched polypropylene film of the present invention, can be easily adjusted to the abovementioned ranges.

In the biaxially stretched polypropylene film of the present invention, the content of the polypropylene resin B preferably falls below 50 mass%, more preferably 49 mass% or less, and still more preferably 40 mass% or less when the total amount of the resin contained in the biaxially stretched polypropylene film is regarded as 100 mass%. The content of the polypropylene resin B preferably 10 mass% or more, more preferably 15 mass% or more, still more preferably 25 mass% or more, and particularly preferably 30 mass% or more when the total amount of the resin contained in the biaxially stretched polypropylene film is regarded as 100 mass%.

The weight-average molecular weight Mw of the polypropylene resin B is preferably 300,000 or more, more preferably 350,000 or more, still more preferably 360,000 or more, and particularly preferably exceeds 360,000. The weight-average molecular weight Mw of the polypropylene resin B is preferably 550,000 or less, more preferably 450,000 or less, and still more preferably 420,000 or less. When the weight average molecular weight Mw of the polypropylene resin B falls within the abovementioned range, the thickness of a cast sheet can be more easily controlled and the unevenness in thickness is less likely to occur in a production process of a biaxially stretched polypropylene film.

Note that the weight-average molecular weight Mw of the polypropylene resin B is a property of the polypropylene resin B as a raw material resin. The number-average molecular weight Mn, the Z average molecular weight Mz, the molecular weight distribution (Mw/Mn), the molecular weight distribution (Mz/Mn), the weight fraction w at the logarithmic molecular weight Log (M) = 4.0, the melt flow rate (MFRB) at 230°C, MERA-MERE, the mesopentad fraction ([mmmm]), and the heptane insoluble (HI) of the polypropylene resin B described later, are also properties of the polypropylene resin B as a raw material resin.

The number-average molecular weight Mn of the polypropylene resin B is preferably 40,000 or more and 54,000 or less, more preferably 42,000 or more and 50,000 or less, and still more preferably 44,000 or more and 48,000 or less. When the number-average molecular weight Mn of the polypropylene resin B falls within the abovementioned range, the heat resistance of the capacitor to be produced is further improved.

The Z average molecular weight Mz of the polypropylene resin B preferably exceeds 1.55 million and is 2 million or less, and more preferably 1.58 million or more and 1.9 million or less. When the Z average molecular weight Mz of the polypropylene resin B falls within the abovementioned range, the dielectric breakdown strength of the biaxially stretched polypropylene film at high temperatures is further improved.

The molecular weight distribution (Mw/Mn) of the polypropylene resin B is preferably 5.0 or more, more preferably 5.5 or more, still more preferably 7.0 or more, particularly preferably 7.5 or more, and most preferably 8.0 or more. The molecular weight distribution (Mw/Mn) of the polypropylene resin B is preferably 11.0 or less, more preferably 10.0 or less, and still more preferably 8.5 or less. When Mw/Mn falls within the abovementioned range, the stretchability of the polypropylene film is further improved, whereby a thinner biaxially stretched polypropylene film can be produced.

The molecular weight distribution (Mz/Mn) of the polypropylene resin B is preferably 30 or more and 40 or less, and more preferably 33 or more and 36 or less. When Mz/Mn falls within the abovementioned range, the stretchability of the polypropylene film is further improved, whereby a thinner biaxially stretched polypropylene film can be produced.

The weight fraction w, at the logarithmic molecular weight Log (M) = 4.0 in an integral molecular weight distribution curve, of the polypropylene resin B is preferably 2.0% or more, more preferably 2.5% or more, and still more preferably 3.0% or more. The weight fraction w is preferably 5.0% or less, more preferably 4.2% or less, and still more preferably falls below 3.8%. When the weight fraction w of the polypropylene resin B falls within the abovementioned range, the weight fraction w after the polypropylene resin A and the polypropylene resin B are mixed, is easily set to 2.6% or more and 4.0% or less due to the combination with the weight fraction w of the polypropylene resin A mentioned above, whereby the dielectric breakdown strength of the biaxially stretched polypropylene film at high temperatures is further improved.

The melt flow rate (MFRB) of the polypropylene resin B at 230°C is preferably 4.5 g/10 min or less, more preferably 4.0 g/10 min or less, still more preferably falls below 3.5 g/10 min, particularly preferably falls below 3.0 g/10 min, and most preferably falls below 2.8 g/10 min. The melt flow rate (MFRB) of the polypropylene resin B at 230°C is preferably 0.1 g/10 min or more, more preferably 0.5 g/10 min or more, and still more preferably 1.5 g/10 min or more.

Note that the difference MFRA-MFRB between MFRA of the polypropylene resin A as a base resin that is a main component and MFRB of the polypropylene resin B as a blend resin is preferably 1.2 g/10 min or more. That is, MFRA is preferably larger than MFRB. MFRA-MFRB is preferably 1.3 g/10 min or more, more preferably 1.5 g/10 min or more, and still more preferably 1.7 g/10 min or more. When MFRA-MFRB falls below 1.2 g/10 min (this term "below 1.2 g/10 min" includes negative values), in a production process of a polypropylene film, the sea-island phase separation structure is not formed at the time of cast sheet molding, or even if the sea-island phase separation structure is formed, the size of the island is very small, whereby it may be difficult to obtain a polypropylene film excellent in the dielectric breakdown strength at high temperatures in the end. In particular, even if the difference between MFRA and MFRB is large, when MFRB is larger (when MFRA-MFRB is negative), the size of the island of the sea-island phase separation structure is very small.

The mesopentad fraction ([mmmm]) of the polypropylene resin B is preferably 99.8% or less, more preferably 99.5% or less, and still more preferably 99.0% or less. The mesopentad fraction is preferably 94.0% or more, more preferably 94.5% or more, and still more preferably 95.0% or more. When the mesopentad fraction falls within the abovementioned range, the moderately high stereoregularity enhances the crystallinity of the polypropylene resin, the voltage endurance of the biaxially stretched polypropylene film at high temperatures is further improved, and the rate of solidification (crystallization) during cast sheet molding becomes moderate, whereby moderate stretchability can be exhibited.

The heptane insoluble (HI) of the polypropylene resin B is preferably 97.5% or more, more preferably 98.0% or more, still more preferably exceeds 98.5%, and is particularly preferably 98.6% or more. The heptane insoluble is preferably 99.5% or less, and more preferably 99.0% or less.

Although the case of using two kinds of polypropylene resins, i.e., the polypropylene resin A (base resin) and the polypropylene resin B (blend resin), has been illustratively described above, the biaxially stretched polypropylene film of the present invention may comprise a resin other than the polypropylene resin. In that case, the total contents of the polypropylene resin A and the polypropylene resin B is preferably 90 mass% or more, more preferably 95 mass% or more, and still more preferably 97 mass% or more when the total of the resin contained in the biaxially stretched polypropylene film is regarded as 100 mass%. The upper limit of the total contents of the polypropylene resin A and the polypropylene resin B is not particularly limited, and may be, for example, 100 mass% or approximately 98 mass% when the total of the resin contained in the biaxially stretched polypropylene film is regarded as 100 mass%. Examples of resins other than the polypropylene resin described above include a long-chain-branched polypropylene resin described later.

Long-chain-branched polypropylene resin

The biaxially stretched polypropylene film of the present invention may further comprise a long-chain-branched polypropylene resin in addition to the polypropylene resin.

Among the long-chain-branched polypropylene resins, a long-chain-branched polypropylene resin (hereinafter, it is also referred to as a "long-chain-branched polypropylene resin C") obtained by polymerizing propylene using a metallocene catalyst is preferred. A large amount of β crystals are formed on the cast sheet in which the biaxially stretched polypropylene film comprises a long-chain-branched polypropylene resin C in addition to the polypropylene resin. As the β crystals are transferred to the α crystals by stretching the cast sheet containing the β crystals, (substantially) arc-shaped irregularities are formed in the polypropylene film obtained by the stretching due to the difference in density between the β crystals and the α crystals, whereby the surface thereof can be suitably roughened.

In a case where a long-chain-branched polypropylene resin obtained through crosslinking and modification with peroxide is used as the long-chain-branched polypropylene resin instead of the long-chain-branched polypropylene resin C polymerized using a metallocene catalyst, the formation of α crystals is promoted and the formation of β crystals is suppressed in the cast sheet by the α-crystal nucleating effect of the long-chain-branched polypropylene resin obtained through crosslinking and modification with peroxide. When a cast sheet containing α crystals is stretched, the transfer of crystallites hardly occurs and irregularities are hardly formed. Accordingly, in order to roughen the biaxially stretched polypropylene film, a long-chain-branched polypropylene resin C polymerized using a metallocene catalyst can be suitably used.

The metallocene catalyst is generally a metallocene compound that forms a polymerization catalyst for producing an olefin macromer. The long-chain-branched polypropylene resin C obtained by polymerizing propylene using a metallocene catalyst is preferable because the branched chain length and the branched chain interval of the polypropylene become appropriate, the compatibility with linear polypropylene is further improved, and a more uniform composition and a more uniform surface shape are easily obtained.

The biaxially stretched polypropylene film of the present invention preferably comprises the polypropylene resin A and the long-chain-branched polypropylene resin C, and more preferably contains the polypropylene resin A, the polypropylene resin B, and the long-chain-branched polypropylene resin C. Since the polypropylene resin A and the polypropylene resin B differ from each other in heptane insoluble (HI) and/or melt flow rate (MFR), etc., and are in a finely mixed state (phase separation state), the arrangement of resin components constituting the biaxially stretched polypropylene film becomes complicated by stretching such an unstretched polypropylene film. When the biaxially stretched polypropylene film of the present invention contains the polypropylene resin A and the polypropylene resin B which differ from each other in heptane insoluble (HI) and/or melt flow rate (MFR), etc., and further contains the long-chain-branched polypropylene resin C, the arrangement of resin components constituting the biaxially stretched polypropylene film becomes complicated, whereby the voltage endurance of the biaxially stretched polypropylene film is further improved and (substantially) arc-shaped fine irregularities are formed so that more suitable roughening can be achieved.

Examples of representative commercially available products of the long-chain-branched polypropylene resin C include MFX3, MFX6 manufactured by Japan Polypropylene Corporation, MFX8 manufactured by Japan Polypropylene Corporation, and the like.

The melt tension of the long-chain-branched polypropylene resin at 230°C is preferably 3 g/cm$^3$ or more and 25 g/cm$^3$ or less, more preferably 5 g/cm$^3$ or more and 20 g/cm$^3$ or less, still more preferably 9 g/cm$^3$ or more and 20 g/cm$^3$ or less, and particularly preferably 9 g/cm$^3$ or more and 17 g/cm$^3$ or less. When the melt tension falls within the abovementioned range, the dielectric breakdown strength of the biaxially stretched polypropylene film at high temperatures is further improved. The measurement of the melt tension of the resin at 230°C in the present specification follows a measurement method described in Examples described later.

The strain hardening parameter of the long-chain-branched polypropylene resin is preferably 2 or more and 10 or less, more preferably 3 or more and less than 6, and still more preferably 4 or more and less than 6. When the strain hardening parameter falls within the abovementioned range, the dielectric breakdown strength of the biaxially stretched polypropylene film at high temperatures is further improved. The measurement of the strain hardening parameter of the resin in the present specification follows a measurement method described in Examples described later.

The melt flow rate of the long-chain-branched polypropylene resin at 230°C is preferably 0.1 to 12 g/10 min, more preferably 1 to 6 g/10 min, still more preferably 1.5 to 4 g/10 min, and particularly preferably preferably 2 to 3.5 g/10 min. When the melt flow rate at 230°C falls within the abovementioned range, excellent flow characteristics in a molten state can be obtained, whereby unstable flow such as melt fracture more hardly occurs, and breakage during the stretching is more suppressed. Therefore, since the film thickness uniformity is more favorable, the formation of a thin wall part in which the dielectric breakdown easily occurs is suppressed, whereby the dielectric breakdown strength of the biaxially stretched polypropylene film at high temperatures is further improved.

The weight-average molecular weight Mw of the long-chain-branched polypropylene resin is preferably 150,000 or more and 600,000 or less, more preferably 200,000 or more and 500,000 or less, still more preferably 250,000 or more and 450,000 or less, and particularly preferably 350,000 or more and 420,000 or less. When the weight-average molecular weight Mw of the long-chain-branched polypropylene resin falls within the abovementioned range, the fluidity of the resin becomes more appropriate, whereby the thickness of the cast sheet is more easily controlled and a thin stretched film is more easily produced. Unevenness hardly occurs in the thicknesses of the cast sheet and the stretched film, and more appropriate stretchability can be obtained.

The number-average molecular weight Mn of the long-chain-branched polypropylene resin is preferably 100,000 or more and 300,000 or less, more preferably 100,000 or more and 250,000 or less, and still more preferably 100,000 or more and 200,000 or less. When the number-average molecular weight Mn of the long-chain-branched polypropylene resin falls within the abovementioned range, the heat resistance of the capacitor to be produced is further improved.

The molecular weight distribution (Mw/Mn) of the long-chain-branched polypropylene resin is preferably 1.5 or more and 4.5 or less, more preferably 1.8 or more and 4.2 or less, still more preferably 2.0 or more and 4.0 or less, particularly preferably 2.1 or more and 3.9 or less, and most preferably 2.2 or more and 3.0 or less. When Mw/Mn falls within the abovementioned range, the stretchability of the polypropylene film is further improved, whereby a thinner biaxially stretched polypropylene film can be produced.

The molecular weight, molecular weight distribution, and the like of the long-chain-branched polypropylene resin can be controlled by adjusting catalysts and polymerization conditions.

The content of the long-chain-branched polypropylene resin preferably 0.1 mass% or more, more preferably 0.5 mass% or more, still more preferably 1 mass% or more, particularly preferably 2 mass% or more, and most preferably 2.5 mass% or more when the total amount of the resin contained in the biaxially stretched polypropylene film is regarded as 100 mass%. The content of the long-chain-branched polypropylene resin is preferably 30 mass% or less, more preferably 20 mass% or less, still more preferably 10 mass% or less, particularly preferably 7 mass% or less, and most preferably 5 mass% or less when the entire resin contained in the biaxially stretched polypropylene film is regarded as 100 mass%. The biaxially stretched polypropylene film of the present invention may comprise one kind or two or more kinds of long-chain-branched polypropylene resins.

Other resins

The biaxially stretched polypropylene film of the present invention may contain a resin other than a polypropylene resin and a long-chain-branched polypropylene resin (hereinafter also referred to as "other resins"). The "other resin" is a resin other than the polypropylene resin and the long-chain-branched polypropylene resin, and is not particularly limited as long as a target biaxially stretched polypropylene film can be obtained. Examples of the other resin include: a polyolefin other than polypropylene such as polyethylene, poly(1-butene), polyisobutene, poly(1-pentene), and poly(1-methylpentene); a copolymer of $\alpha$-olefins such as an ethylene-propylene copolymer, a propylene-butene copolymer, and an ethylene-butene copolymer; a vinyl monomer-diene monomer random copolymer such as styrene-butadiene random copolymer; a vinyl monomer-diene monomer-vinyl monomer random copolymer such as a styrene-butadiene-styrene block copolymer.

Additives

The biaxially stretched polypropylene film of the present invention may further contain additives. Examples of additives include antioxidants, chlorine absorbers, ultraviolet absorbers, lubricants, plasticizers, flame-retardant agents, antistatic agents, coloring agents, and the like.

Properties of biaxially stretched polypropylene film

The dielectric breakdown strength (DCES100°C) of the biaxially stretched polypropylene film of the present invention in DC voltage at 100°C is preferably 550 V/um or more, more preferably 560 V/um or more, still more preferably 570 V/um or more, and particularly preferably 580 V/um or more. The upper limit of the dielectric breakdown strength in DC voltage at 100°C is preferably as high as possible, and is, for example, 650 V/um, 630 V/um.

The dielectric breakdown strength (DCES125°C) of the biaxially stretched polypropylene film of the present invention in DC voltage at 125°C is preferably 530 V/um or more, more preferably 540 V/um or more, still more preferably 550 V/um or more, particularly preferably 565 V/um or more, and most preferably 570 V/um or more. The upper limit of the dielectric breakdown strength in DC voltage at 125°C is preferably as high as possible, and is, for example, 610 V/um, 580 V/um.

The volume resistivity (1 minute value) of the biaxially stretched polypropylene film of the present invention at 100°C is preferably $1.40 \times 10^{15}\ \Omega \cdot m$ or more and $4.00 \times 10^{15}\ \Omega \cdot m$ or less, and more preferably $1.40 \times 10^{15}\ \Omega \cdot m$ or more and $2.00 \times 10^{15}\ \Omega \cdot m$ or less. The method for measuring the volume resistivity (1 minute value) of the polypropylene film in the present specification follows a method described in Examples.

2. Method for producing biaxially stretched polypropylene film

The method for producing the biaxially stretched polypropylene film of the present invention is not particularly limited, and the biaxially stretched polypropylene film can be produced through a production method including, for example, a step for melting a polypropylene resin composition comprising at least the polypropylene resin A and the polypropylene resin B at a temperature of 225°C or higher and 270°C or lower and a shear rate of 2,000 s$^{-1}$ or more and 15,000 s$^{-1}$ or less, the method in which:

the difference MFRA-MFRB between the melt flow rate (MFRA) of the polypropylene resin A and the melt flow rate (MFRB) of the polypropylene resin B being 1.2 g/10 min or more; and
the content of the polypropylene resin A in the polypropylene resin composition being larger than the content of the polypropylene resin B in the polypropylene resin composition. Hereinafter, the abovementioned production method will be illustratively explained.

According to the abovementioned production method, it is possible to produce a biaxially stretched polypropylene film exhibiting a favorable dielectric breakdown strength at high temperatures. The reason why a biaxially stretched polypropylene film exhibiting a favorable dielectric breakdown strength can be provided, is considered to be due to the sea-island phase-separated structure (in particular, an appropriate island size) of the cast sheet due to the usage of two different kinds of polypropylene resins.

In the method for producing the biaxially stretched polypropylene film, a polypropylene resin composition comprising at least the polypropylene resin A and the polypropylene resin B is used. Here, the content of the polypropylene resin A in the polypropylene resin composition being larger than the content of the polypropylene resin B in the polypropylene resin composition means that, in the relation between the polypropylene resin A and the polypropylene resin B, the polypropylene resin A is a base resin that is a main component, and the polypropylene resin B is a blend resin for the base resin. Note that the "polypropylene resin A" and the "polypropylene resin B" in the method for producing a biaxially stretched polypropylene film are identical to the "polypropylene resin A" and the "polypropylene resin B" described in the biaxially stretched polypropylene film of the present invention; however, specifically, the difference MFRA-MFRB between MFRA and MFRB is preferably 1.2 g/10 min or more in the production method described above. Note that, when a biaxially stretched polypropylene film contains long-chain-branched polypropylene resin, the polypropylene resin A and the "polypropylene resin B" may be used with the "long-chain-branched polypropylene resin" being added thereto, and it is preferable to use a polypropylene resin composition containing the polypropylene resin A, the polypropylene resin B, and the long-chain-branched polypropylene resin C.

The method for mixing the resins applied to the abovementioned production method is not particularly limited, and examples thereof include: a method for dry-blending polymer powders or pellets of a base resin, a blend resin, and a long-chain-branched polypropylene resin if necessary by using a mixer etc.; and a method for supplying polymer powders or pellets of a base resin, a blend resin, and a long-chain-branched polypropylene resin if necessary to a kneader, followed by melting and kneading to obtain a kneaded product.

The mixer and the kneader are not particularly limited. The kneader may be any of a single-screw type kneader, a two-screw type kneader, or a multi-screw type kneader having three or more screws. In a case of using a kneader having two or more screws, the type of kneading may be rotation in the same direction or in different directions.

In the case of kneading by melting and kneading, the kneading temperature is not particularly limited as long as a favorable kneaded product is obtained. The temperature is generally within a range of 200°C or higher and 300°C or lower, and preferably 230°C or higher and 270°C or lower, from the viewpoint of preventing the degradation of resins. In order to prevent the degradation of resins while being kneaded and mixed, the kneader may be purged with an inert gas, such as nitrogen. The resin having been melted and mixed may be pelletized into a suitable size using a generally-known granulator. As a result, mixed polypropylene raw material resin pellets can be prepared.

The polypropylene resin composition may contain additives. As the additive, an additive identical to the additive explained for the biaxially stretched polypropylene film of the present invention can be used. The polypropylene resin composition may comprise the additives to a degree exerting no adverse effect on the biaxially stretched polypropylene film.

In the method for producing the biaxially stretched polypropylene film, first, polypropylene resin pellets, dry-mixed polypropylene resin pellets, or mixed polypropylene resin pellets prepared by being melted and kneaded in advance, are supplied to an extruder, and heated and melted.

The polypropylene resin composition is preferably melted at 225°C or higher and 270°C or lower. Specifically, the set temperature in the extruder is set to 225°C or higher and 270°C or lower at the time of heating and melting the polypropylene resin composition. Accordingly, a sea-island phase-separated structure is formed at the time of cast sheet molding as described later, whereby it is possible to produce a biaxially stretched polypropylene film having an excellent dielectric breakdown strength at high temperatures.

The polypropylene resin composition is preferably melted at a shear rate of 2,000 $s^{-1}$ or more and 15,000 $s^{-1}$ or less while maintaining the temperature at 225°C or higher and 270°C or lower. Accordingly, a sea-island phase-separated structure is formed at the time of cast sheet molding as described later, whereby it is possible to produce a polypropylene film having an excellent dielectric breakdown strength at high temperatures. When the shear rate falls below 2000 $s^{-1}$, the extrusion amount is not constant, and the shape and dimensions of the cast sheet may become irregular or fluctuate regularly, and breakage of the cast sheet at the time of being transported and breakage thereof at the time of being stretched are likely to occur. When the shear rate exceeds 15,000 $s^{-1}$, unmelted materials are extruded in the extruder through a phenomenon called "breakup" and a uniform cast sheet cannot be obtained, which may lead to easy breakage at the time of being stretched; alternatively, excessive heat is generated when passing through a tip clearance, and the polypropylene resin composition is significantly deteriorated, and thus, even if a uniform cast sheet is obtained, the film obtained by stretching may have a lowered dielectric breakdown strength. The shear rate can be adjusted by adjusting the cylinder diameter and screw rotation speed of the extruder and the groove depth of the screw.

The shear rate is preferably 2,000 $s^{-1}$ or more and 10,000 $s^{-1}$ or less, and more preferably 2,000 $s^{-1}$ or more and 2,300 $s^{-1}$ or less. When the shear rate falls within such a range, a biaxially stretched polypropylene film having a weight fraction w of 2.6% or more and 4.0% or less is easily obtained, and the heat resistance of a film capacitor using the biaxially stretched polypropylene film as a capacitor dielectric is further improved.

Next, the molten polypropylene resin composition is extruded into a sheet using a T-die, and cooled and solidified by at least one metal drum, whereby it is possible to form an unstretched cast sheet. The surface temperature of the metal drum (the temperature of the metal drum with which the extruded sheet first comes into contact) is preferably 50°C or higher and 105°C or lower, and more preferably 60°C or higher and 100°C or lower. The surface temperature of the metal drum can be determined depending on the physical properties etc. of the polypropylene resin to be used. When the surface temperature of the metal drum falls below 50°C, favorable sheet formability of the cast sheet can be hardly obtained, and stretching unevenness or breakage may be likely to occur during stretching film formation.

The thickness of the cast sheet is not particularly limited, and is preferably 0.05 mm or more and 2 mm or less, and more preferably 0.1 mm or more and 1 mm or less.

The biaxially stretched polypropylene film can be produced by performing a biaxial stretching process on the cast sheet. Stretching is preferably biaxial stretching that causes biaxial orientation vertically and horizontally, and the stretching method is preferably a sequential biaxial stretching method. In the sequential biaxial stretching method, for example, the cast sheet is firstly maintained at a temperature of 110°C or higher and 170°C or lower (preferably 135°C or higher and 170°C or lower), and stretched in the flow direction while being passed between rolls having different speeds. The stretching ratio in the flow direction is preferably 3.5 times or more and 5.5 times or less, and more preferably 4.2 times or more and 5.4 times or less. Subsequently, the sheet is guided to a tenter and stretched in the lateral direction. The temperature during stretching in the lateral direction is preferably 150°C or higher and 165°C or lower, and the stretching ratio in the lateral direction is preferably 9 times or more and 11 times or less. Then, the sheet is relaxed at a factor of 2 or more and 10 or less and thermally solidified.

A biaxially stretched polypropylene film can be produced through the production process explained above.

The biaxially stretched polypropylene film may be subjected to a corona discharge treatment online or offline after the completion of the stretching and thermal solidification step, from the viewpoint of enhancing adhesive properties in a subsequent step, such as a metal deposition processing step. The corona discharge treatment can be performed by using a known method. The treatment is preferably performed by using, as an atmospheric gas, air, carbon dioxide gas, nitrogen gas, or a mixed gas thereof.

In the biaxially stretched polypropylene film of the present invention produced through the abovementioned production method, even in a case where the film thickness is as thin as 6.0 $\mu$m or less, the film has excellent dielectric breakdown strength when a direct voltage is applied and excellent dielectric breakdown strength when an alternating voltage is applied at a high temperature of approximately 125°C (100°C to 125°C), and also can exhibit excellent heat shrinkage resistance in terms of suppressing heat shrinkage in the machine direction (MD) at temperature up to approximately 150°C which exceeds the high temperature mentioned above. Furthermore, a capacitor which uses the biaxially stretched polypropylene film has excellent heat resistance at a high temperature of approximately 120°C (100°C to 125°C), and specifically, since the decrease in the static capacitance of the capacitor is suppressed even after use for long hours at such high temperatures, the capacitor also has excellent heat shock resistance in terms of suppressing heat tightening (deformation) of the capacitor in repeated use at such high temperatures for which the inside an engine room is assumed, and at low temperatures. Therefore, the biaxially stretched polypropylene film of the present invention is suitable for use in a capacitor, and can be preferably used as a dielectric for a capacitor constituting an inverter in a hybrid car or an electric car.

3. Metallized film, capacitor, and production method therefor

The metallized film of the present invention is a metallized film having a metal layer on at least one surface of the biaxially stretched polypropylene film.

The metal layer functions as an electrode. Examples of the metal used in the metal layer include: single metals, such as zinc, lead, silver, chromium, aluminum, copper, and nickel; mixtures of several kinds of these metals; alloys thereof; and the like. Among these metals, zinc and aluminum are preferable as they are excellent in the environmental load, economical efficiency, and capacitor performance.

Examples of the method for laminating a metal layer on at least one surface (one side or both sides) of the biaxially stretched polypropylene film are not particularly limited, and include a vacuum deposition method and a sputtering method. The vacuum deposition method is preferable from the viewpoint of the excellent productivity and economical efficiency. Examples of the vacuum evaporation method include a crucible method, a wire method, and the like, and an optimal method can be suitably selected.

A margin pattern used for laminating a metal layer by vapor deposition is not particularly limited, and it is preferable to apply a pattern, including a so-called special margin such as a fishnet pattern or a T margin pattern, on one surface of the biaxially stretched polypropylene film, from the viewpoint of further improving the safety of the capacitor and further suppressing the destruction and short circuit of the capacitor.

A method for forming the margin is not particularly limited, and the formation may be performed by a known method such as a tape method or an oil method.

The thickness of the metallized film of the present invention is not particularly limited, and is preferably 1.8 $\mu$m or more and 3.0 $\mu$m or less, and more preferably 2.0 $\mu$m or more and 2.8 $\mu$m or less.

The capacitor of the present invention is a capacitor containing the metallized film. The metallized film of the present disclosure can be laminated or wound up by a conventionally-known method to form a film capacitor.

The film capacitor may have a configuration in which a plurality of metallized films are laminated, or may have a wound metallized film. Such a film capacitor can be suitably used for a capacitor for an inverter power source device that controls a drive motor in an electric vehicle, a hybrid vehicle, or the like. Such a film capacitor can also be suitably used in applications for railway vehicles, wind power generation, solar power generation, general home appliances, and the like.

Examples

The present invention will be described more specifically with Examples, but these examples are intended to illustrate the present invention and do not limit the present invention in any way.

Note that raw materials used in Examples and Comparative examples are as follows. - A1: Polypropylene resin manufactured by Prime Polymer Co., Ltd. with Irganox 1010 being added thereto as an antioxidant, weight-average molecular weight (Mw): 310,000, number-average molecular weight (Mn): 33,000, molecular weight distribution (Mw/Mn): 9.4, Z average molecular weight (Mz): 1.4 million, weight fraction w at Log (M) = 4.0: 6.2%, mesopentad fraction: 95.8%, melt flow rate (230°C): 4.9 g/10 min, heptane insoluble: 97.3%

- A2: Polypropylene resin manufactured by Borealis AG.: weight-average molecular weight (Mw): 340,000, number-average molecular weight (Mn) : 42,000, molecular weight distribution (Mw/Mn): 8.1, Z average molecular weight (Mz): 1.5 million, weight fraction w at Log (M) = 4.0: 4.5%, mesopentad fraction: 96.9%, melt flow rate (230°C): 4.0 g/10 min, heptane insoluble: 98.5%
- B1: Polypropylene resin manufactured by Korea Petrochemical Ind. Co., LTD., weightaverage molecular weight (Mw): 380,000, number-average molecular weight (Mn): 46,000, molecular weight distribution (Mw/Mn): 8.3, Z average molecular weight (Mz): 1.6 million, weight fraction w at Log (M) = 4.0: 3.3%, mesopentad fraction: 98.0%, melt flow rate (230°C): 2.3 g/10 min, heptane insoluble: 98.8%
- B2: Polypropylene resin manufactured by Korea Petrochemical Ind. Co., LTD., weightaverage molecular weight (Mw): 350,000, number-average molecular weight (Mn): 45,000, molecular weight distribution (Mw/Mn): 7.8, Z average molecular weight (Mz): 1.6 million, weight fraction w at Log (M) = 4.0: 4.6%, mesopentad fraction: 97.2%, melt flow rate (230°C): 3.8 g/10 min, heptane insoluble: 98.6%
- C1: Metallocene long-chain-branched polypropylene resin manufactured by Japan Polypropylene Corporation, melt flow rate (230°C): 2.8 g/10 min, strain hardening parameter: 5.8, melt tension (230°C): 17 g/cm$^3$, weight-average molecular weight (Mw): 380,000, number-average molecular weight (Mn): 160,000, molecular weight distribution (Mw/Mn): 2.4
- C2: Metallocene long-chain-branched polypropylene resin manufactured by Japan Polypropylene Corporation, melt flow rate (230°C): 8 g/10 min, strain hardening parameter: 4.5, melt tension (230°C) : 6 g/cm$^3$, weight average molecular weight (Mw): 280,000, number-average molecular weight (Mn): 110,000, molecular weight distribution (Mw/Mn): 2.7
- C3: Metallocene long-chain-branched polypropylene resin manufactured by Japan Polypropylene Corporation, melt flow rate (230°C): 2.9 g/10 min, strain hardening parameter: 5, melt tension (230°C): 9 g/cm$^3$, weight average molecular weight (Mw): 380,000, number-average molecular weight (Mn): 140,000, molecular weight distribution (Mw/Mn): 2.7

Example 1

Production of biaxially stretched polypropylene film

Resins A1, B1, and C1 were dry-blended so that the mixing ratio satisfied (Resin A1) : (Resin B1) : (Resin C1) = 63 : 34 : 3 by mass ratio. Subsequently, the mixture was supplied to an extruder and melted at a resin temperature of 250°C, then extruded by using a T-die, wound around a metal drum whose surface temperature was maintained at 92°C, and solidified to produce an unstretched cast sheet having a thickness of approximately 115 um. Subsequently, the unstretched cast sheet was stretched by a factor of 5 in the flow direction at a temperature of 140°C, immediately cooled to room temperature, and then stretched by a factor of 10 in the lateral direction at a temperature of 165°C with a tenter to produce a very thin biaxially stretched polypropylene film having a thickness of 2.3 $\mu$m.

Production of metallized film

An aluminum metal layer was formed on the biaxially stretched polypropylene film using a vapor deposition apparatus (manufactured by ULVAC, Inc., product name: winding-type vacuum deposition apparatus EWE-060) so that the surface resistivity of the metal layer was 20 $\Omega/\square$. At this time, the vapor deposition was performed by an oil margin method so that an insulating groove portion (insulating margin: length of 1 mm in the width direction) continuous in a longitudinal direction of the film was formed at one end in a film width direction after slitting. The film was slit to produce a metallized film having a total width of 30 mm. The thickness of the metallized film was 2.3 $\mu$m.

Production of capacitor

Two metallized films were brought together. The metallized films which have been brought together, was wound on 1360 turns under the conditions with a winding tension of 140 to 180 g, a contact pressure of 200 to 255 g, and a winding speed of 4 m/s, by using a 3KAW-N2 automatic winder manufactured by KAIDO MFG. CO., LTD. The element-wound element was subjected to heat treatment at 120°C for 15 hours while being pressed at a load of 5.2 kg/cm$^2$. Next, zinc metal was sprayed on the element end surface. As the spraying conditions, the feed speed was 15 mm/s, the thermal spraying voltage was 22 V, the spraying pressure was 0.3 MPa, and the thickness was 0.7 mm. A flat capacitor was manufactured as described above. Subsequently, a lead wire was soldered to the end surface of the flat capacitor, and the flat capacitor was sealed with an epoxy resin. The epoxy resin was cured by being heated at 90°C for 2.5 hours and then further being heated at 120°C for 2.5 hours. The static capacitance of the produced capacitor was 50 μF.

Example 2

Resin A2 was used instead of Resin A1. In addition, Resin C1 was not used. Resins A2 and B1 were dry-blended so that the mixing ratio satisfied (Resin A2) : (Resin B1) = 65 : 35 by mass ratio. A biaxially stretched polypropylene film, a metallized film, and a capacitor were produced in the same manner as in Example 1 except for the abovementioned difference.

Example 3

Resin A2 was used instead of Resin A1. Resins A2, B1, and C1 were dry-blended so that the mixing ratio satisfied (Resin A2) : (Resin B1) : (Resin C1) = 63 : 34 : 3 by mass ratio. A biaxially stretched polypropylene film, a metallized film, and a capacitor were produced in the same manner as in Example 1 except for the abovementioned difference.

Example 4

Resin A2 was used instead of Resin A1. Resins A2, B1, and C1 were dry-blended so that the mixing ratio satisfied (Resin A2) : (Resin B1) : (Resin C1) = 64 : 35 : 1 by mass ratio. A biaxially stretched polypropylene film, a metallized film, and a capacitor were produced in the same manner as in Example 1 except for the abovementioned difference.

Example 5

Resin A2 was used instead of Resin A1. Resins A2, B1, and C1 were dry-blended so that the mixing ratio satisfied (Resin A2) : (Resin B1) : (Resin C1) = 60 : 30 : 10 by mass ratio. A biaxially stretched polypropylene film, a metallized film, and a capacitor were produced in the same manner as in Example 1 except for the abovementioned difference.

Example 6

Resin A2 was used instead of Resin A1. In addition, Resin C2 was used instead of Resin C1. Resins A2, B1, and C2 were dry-blended so that the mixing ratio satisfied (Resin A2) : (Resin B1) : (Resin C2) = 63 : 34 : 3 by mass ratio. A biaxially stretched polypropylene film, a metallized film, and a capacitor were produced in the same manner as in Example 1 except for the abovementioned difference.

Example 7

Resin A2 was used instead of Resin A1. In addition, Resin C3 was used instead of Resin C1. Resins A2, B1, and C3 were dry-blended so that the mixing ratio satisfied (Resin A2) : (Resin B1) : (Resin C3) = 63 : 34 : 3 by mass ratio. A biaxially stretched polypropylene film, a metallized film, and a capacitor were produced in the same manner as in Example 1 except for the abovementioned difference.

Comparative example 1

Resin B2 was used instead of Resin B1. In addition, Resin C1 was not used. Resins A1 and B2 were dry-blended so that the mixing ratio satisfied (Resin A1) : (Resin B2) = 65 : 35 by mass ratio. A biaxially stretched polypropylene film, a metallized film, and a capacitor were produced in the same manner as in Example 1 except for the abovementioned difference.

Comparative example 2

Resin C1 was not used. Resins A1 and B1 were dry-blended so that the mixing ratio satisfied (Resin A1) : (Resin B1) = 65 : 35 by mass ratio. A biaxially stretched polypropylene film, a metallized film, and a capacitor were produced in the same manner as in Example 1 except for the abovementioned difference.

Measurement method

As for of each of Examples and Comparative examples, the properties were evaluated under the following measurement conditions.

(1) Evaluation of properties of resin

Measurement of ultrasonic wave propagation velocity

The ultrasonic wave propagation velocity was measured by using an SST (Sonic Sheet Tester, ultrasonic wave propagation velocity meter). Specifically, the measurement was performed with an SST-4000 Ultra Sonic Orientation Tester manufactured by NOMURA SHOJI CO., LTD. The SST includes a measurement stand on which a biaxially stretched polypropylene film as a subject is placed, and 8 pairs, that is, 16 pieces of ultrasonic transmission/reception elements that oscillate and receive ultrasonic waves as measurement heads in the SST. The ultrasonic wave having a frequency of 25 MHz was used. The oscillation terminal and the reception terminal were brought into contact with an upper surface of the biaxially stretched polypropylene film placed on the measurement stand so as to separate by a predetermined distance (120 mm), and the ultrasonic wave was oscillated in a pulse form from the oscillation terminal. At this time, the time taken for the ultrasonic wave to propagate through the subject and reach the reception terminal was measured, and the ultrasonic wave propagation velocity was calculated based on the predetermined distance and time. The measurement time was set to 13 seconds.

The measurements were carried out on the ultrasonic wave propagation velocities over 360° (omni-direction) by using 8 pairs, that is, 16 pieces of the elements placed every 11.25°. An average value of these measured values was taken as an average value of the ultrasonic wave propagation velocities in the omni-direction in the biaxially stretched polypropylene film.

A measured value at an axis (peak axis) which becomes the maximum in one measurement over 360° was taken as the maximum value (Vmax) of the ultrasonic wave propagation velocities in the omni - direction in the biaxially stretched polypropylene film.

Furthermore, a measured value at an axis (deep axis) which becomes the minimum in one measurement over 360° was taken as the minimum value (Vmin) of the ultrasonic wave propagation velocities in the omni-direction in the biaxially stretched polypropylene film.

The ultrasonic wave propagation velocity was measured at room temperature (25°C±2°C).

Measurement of number-average molecular weight (Mn), weight-average molecular weight (Mw), Z average molecular weight (Mz), molecular weight distribution (Mw/Mn), and weight fraction w of polypropylene resin

The biaxially stretched polypropylene film of each of Examples and Comparative examples was used as a sample to measure the average molecular weight and the molecular weight distribution of the polypropylene resin under the following conditions, by using SEC (size exclusion chromatography).

Device: HLC-8321GPC/HT (detector: differential refractometer (RI)) (produced by Tosoh Corporation)
Columns: one TSKgel guardcolumn HHR(30)HT column (7.5 mm I.D. × 7.5 cm) + three TSKgel GMHHR-H(20)HT columns (7.8 mm I.D. × 30 cm) (produced by Tosoh Corporation)
Eluent: 1,2,4-trichlorobenzene (for GPC, produced by FUJIFILM Wako Pure Chemical Corporation) + BHT (0.05%)
Flow rate: 1.0 mL/min
Detection condition: polarity-(-)
Injected amount: 0.3 mL
Column temperature: 140°C
System temperature: 40°C
Sample concentration: 1 mg/mL

Sample pretreatment: A sample (biaxially stretched polypropylene film) was weighed, a solvent (1,2,4-trichlorobenzene containing 0.1% BHT) was added, and the sample was dissolved by shaking at 140°C for 1 hour. Then, the resultant was heated and filtered through a 0.5 μm sintered filter.

Calibration curve: A calibration curve of the fifth-order approximate curve was prepared using polystyrene standard produced by Tosoh Corporation. However, the molecular weight was converted into the molecular weight of polypropylene using the Q-factor.

From the obtained calibration curve and SEC chromatogram, analysis software for the measurement device was used to plot the molecular weight (logarithmic values) on the horizontal axis and the integral value of the concentration fraction on the vertical axis, thereby obtaining an integral molecular weight distribution curve. The derivative value (slope of the integral molecular weight distribution curve) of the integral molecular weight distribution curve at each molecular weight was obtained, and a derivative molecular weight distribution curve was obtained by plotting the molecular weight (log values) on the horizontal axis and the derivative values on the vertical axis.

The number-average molecular weight Mn, the weight -average molecular weight Mw, and the Z average molecular weight Mz were obtained from these curves. The values of Mw and Mn were used to obtain a molecular weight distribution (Mw/Mn). In the integral molecular weight distribution curve, a value when the logarithmic molecular weight Log(M) = 4.0 is satisfied, was defined as weight fraction w. The weight fraction w denotes the weight fraction of a molecule when the logarithmic molecular weight Log(M) = 4.0 is satisfied, i.e., a molecular weight of 10,000 or less.

Heptane insoluble (HI)

Each polypropylene resin as a raw material used in Examples and Comparative examples was press-molded to a size of 10 mm $\times$ 35 mm $\times$ 0.3 mm to prepare approximately 3 g of a measurement sample. Next, approximately 150 mL of heptane was added, and Soxhlet extraction was performed for 8 hours. The heptane insoluble was calculated from the sample mass before and after the extraction.

Mesopentad fraction

Each polypropylene resin as a raw material used in Examples and Comparative examples was dissolved in a solvent, and the mesopentad fraction was measured under the following conditions using a high-temperature-type Fourier-transform nuclear magnetic resonance apparatus (high-temperature-type FT-NMR).

High-temperature-type nuclear magnetic resonance (NMR) apparatus: High-temperature-type Fourier-transform nuclear magnetic resonance apparatus (high-temperature FT-NMR) manufactured by JEOL Ltd., model number: JNM-ECP500

Observation nucleus: 13C (125 MHz)
Measurement temperature: 135°C
Solvent: Ortho-dichlorobenzene (ODCB: mixed solvent of ODCB and deuterated ODCB (mixing ratio=4/1))
Measurement mode: Single pulse proton broadband decoupling
Pulse width: 9.1 $\mu$sec (45° pulse)
Pulse interval: 5.5sec
Number of integrations: 4,500 times
Shift standard: $CH_3$ (mmmm) = 21.7 ppm

The pentad fraction representing the stereoregularity was calculated as a percentage (%) based on an intensity integrated value of each signal derived from a combination (mmmm, mrrm, etc.) of five sequences (pentads) including the sequences arranged in the same direction "meso (m)" and the sequences arranged in different directions "raceme (r)." Regarding the assignment of each signal derived from mmmm, mrrm, or the like, for example, the description about spectrum in "T. Hayashi et al., Polymer, vol. 29, page 138 (1988)" was referenced.

Measurement of melt tension

By using the Capilograph 1B manufactured by TOYO SEIKI SEISAKU-SHO, LTD., under the following conditions, a resin as a raw material used in Examples and Comparative examples was extruded in the form of strings and wound around a roller, and at that time, the tension detected by a pulley was defined as melt tension.

Capillary: Diameter 2.0 mm, length 40 mm
Cylinder diameter: 9.55 mm
Cylinder extrusion rate: 20 mm/min
Winding speed: 4.0 m/min
Temperature: 230°C

When the melt tension is extremely high, the resin may be broken at a taking-over speed of 4.0 m/min, and in such a case, the taking-over speed was lowered, and the tension at the highest speed at which the taking-over can be achieved, was defined as the melt tension.

Measurement of strain hardening parameter

The strain hardening parameter was calculated according to the following procedure from the following shear viscoelasticity measurement results and elongation viscosity measurement results.

a) Dynamic shear viscoelasticity measurement

Device: ARES-G2 (manufactured by TA Instruments)
Jig: Cone plate (25 mm$\varphi$, 0.1 rad.)
Temperature: 230°C
Frequency: 100 to 0.01 rad./sec.

b) Elongation viscosity measurement

Device: ARES-G2 (manufactured by TA Instruments)
Jig: Elongation viscosity fixture
Temperature: 230°C
Strain rate: 0.1/s. However, in a case where the torque was low under these conditions and the elongation viscosity could not be measured, the strain rate was set to 1.0/s.

Preliminary strain 0.2 mm

Measurement procedure:

(1) Resin pellets as a raw material used in Examples and Comparative examples were heat-compressed at 230°C for 5 minutes using a hot press machine to prepare a press sheet of approximately 0.6 mm. The obtained press sheet was subjected to the shear viscoelasticity measurement (frequency dispersion) and the elongation viscosity measurement using a rheometer ARES-G2 manufactured by TA Instruments.
(2) The shear viscoelasticity measurement (frequency dispersion) was performed by inserting a press sheet into a cone plate jig (25 mm(p, 0.1 rad), at 230°C and a frequency of 100 to 0.01 rad/sec.
(3) The elongation viscosity measurement was measured using an elongation viscosity measurement jig at 230°C at a strain rate of 0.1/s after a preliminary strain of 0.2 mm was applied. Note that, in a case where the torque was low under these conditions and the elongation viscosity could not be measured, the strain rate was set to 1.0/s. The elongation viscosity measurement jig is a jig for measuring the elongation viscosity of a highly viscous substance such as a molten polymer, and includes a fixation portion and a rotary drum so that pulling can be achieved at a constant Henky strain rate.
(4) As for the data obtained through the shear viscoelasticity measurement (frequency dispersion), based on the method described in "Kunihiro OSAKI, Ashita MURAI, Nobuo BESSHO, and Bong Shik KIM, the journal of the Society of Rheology Japan, Vol. 4, 166 (1976)", the viscosity growth function represented by the following formula (B)

[Mathematical formula 1]

$$\overline{\eta}\left(t\right)$$

was obtained. [Mathematical formula 2]

$$\overline{\eta}\left(t\right)=t\left[G''(\omega)+1.12G'(0.5\omega)-0.200G'(\omega)\right]_{t=\frac{1}{\omega}} \qquad (B)$$

where $\omega=1/t$.

Here, G' (ω) denotes the storage modulus as a function of angular speed ω, G' (ω/2) denotes the storage modulus as a function of ω/2, G"(ω) denotes the loss modulus as a function of angular speed ω, and t denotes time.

(5) On the other hand, in an unsteady uniaxial elongational viscosity curve ηE (t) obtained by the elongation viscosity measurement, the time at which the magnitude of strain was 2 or more and the elongation viscosity was maximum was defined as tmax, and the nonlinearity parameter of the elongation viscosity, that is, the strain hardening parameter (λ) was obtained by the following formula (A). Note that a conceptual diagram of λ is illustrated in Fig. 1. [Mathematical formula 3]

$$\lambda = \eta_E \ (t_{max}) \ / 3\overline{\eta}\left(t_{max}\right) \qquad (A)$$

(6) Note that, when the overlapping of the linear regions on a short time side between the viscosity growth function obtained by the formula (B) and the unsteady uniaxial elongational viscosity curve was poor, shifting was performed such that overlapping was achieved in the vicinity of middle point of the linear portion in the unsteady uniaxial elongational viscosity curve, thereby obtaining the strain hardening parameter λ. This is a measure taken for reducing an error because, in a case where a cross-sectional area increases more than an expected value due to the release of strain or the like in the elongation viscosity measurement, the sample may sag and the cross-sectional area may decrease due to a low viscosity.

Measurement of melt flow rate (MFR)

The melt flow rate (MFR) of resin pellets as a raw material used in Examples and Comparative examples was measured by using a Melt index of TOYO SEIKI CO., LTD. according to the condition M of JIS K 7210. Specifically, first, a sample weighed to 4 g was inserted into a cylinder adjusted to a test temperature of 230°C, and the cylinder was preheated for 3.5 minutes under a load of 2.16 kg. Thereafter, the weight of the sample extruded from a bottom hole in 30 seconds was measured to obtain MFR (unit: g/10 min or g/10 min). The abovementioned measurement was repeated three times, and an average value thereof was taken as the measured value of MFR.

(2) Evaluation of properties of biaxially stretched polypropylene film Measurement of dielectric breakdown strength: direct current (DC)

The dielectric breakdown voltage (BDV) of the biaxially stretched polypropylene film was measured 16 times at room temperature (25°C), 100°C, or 125°C, under the following test conditions, in the electrode configuration described in JIS C2151 (2006) 17.2.2 (flat plate electrode method). Note that the applied voltage at the time when leakage current having the following upper limit reference value was detected during the pressure boosting, was defined as BDV. BDV was divided by the film thickness (μm), and an average value of 12 points excluding 2 points from the top and 2 points from the bottom in the results of the measurement at 16 times, was defined as the dielectric breakdown strength DCES (V/pm).

Specimen: Approximately 150 mm × 150 mm
Specimen condition adjustment: 30 minutes under atmospheric conditions
Power source: Direct current
Atmosphere: In the air, at room temperature (25°C), 100°C, or 125°C
Tester: DC Withstanding Voltage/Insulation Resistance Tester TOS9213AS manufactured by Kikusui Electronics Corp.
Voltage rising speed: 100 V/s
Current detection response speed: MID
Upper limit reference value: 5 mA

Measurement of volume resistivity

Measurement of volume resistivity ρV

A specific measurement procedure of the volume resistivity of the biaxially stretched polypropylene film is described below, and as for conditions not specifically described, the measurement was carried out based on JIS C 2139-3-1:2018.

First, a volume resistivity measurement jig (hereinafter, also simply referred to as a jig) was placed in a thermostatic bath in an environment of 100°C. The configuration of the jig is as follows. A DC power source and a DC ammeter were connected to the jig.

Volume resistivity measurement jig

Main electrode (diameter 50 mm)
Counter electrode (diameter 85 mm)
Annular guard electrode surrounding the main electrode (outer diameter: 80 mm, inner diameter: 70 mm)

Each electrode is made of gold-plated copper, and a conductive rubber is attached to a surface which comes into contact with a sample. The conductive rubber in use is EC-60BL (W300) manufactured by Shin-Etsu Silicone Co., Ltd., and a shiny surface of the conductive rubber is pasted to the gold-plated copper so as to come into contact therewith.
Next, each biaxially stretched polypropylene film (hereinafter, also referred to as a sample) in Examples and Comparative examples was set in a jig in a thermostatic bath. Specifically, the main electrode and the guard electrode were brought into close contact with one surface of the sample, while a counter electrode was brought into close contact with the other surface, and the sample and each electrode were brought into close contact with each other at a load of 5 kgf. Thereafter, the sample was caused to stand still for 30 minutes.
Next, a voltage was applied to the sample so that the potential gradient became 200 V/um.
After the application of the voltage, a current value after the elapse of 1 minute was read, and the volume resistivity was calculated by the following formula. Note that, for the voltage application and the current value measurement, 6517B (electrometer/insulation resistance tester) manufactured by Keithley Instruments, Inc. was used.

Volume resistivity = [(effective electrode area) $\times$ (applied voltage)]/[(thickness of sample) $\times$ (current value)]

Here, the effective electrode area was obtained by the following formula.

(Effective electrode area) = circumference ratio $\times$ [[[(Diameter of main electrode) + (Inner diameter of guard electrode)]/2]/2]$^2$

This was repeated three times, and an arithmetic average value obtained in one significant digit was taken as the volume resistivity ($\Omega \cdot$cm).

Measurement of thickness

The thickness of a biaxially stretched polypropylene film was measured, in an environment of a temperature of 23 $\pm$2°C and a humidity of 50$\pm$5%RH, using a paper thickness measuring instrument MEI-11(measurement pressure 100 kPa, descending speed 3 mm/sec, measurement terminal $\varphi$=16 mm, measurement force 20.1 N) manufactured by CITIZEN SEIMITSU CO., LTD. The samples were cut out from a roll while 10 or more sheets thereof were overlapped, and handled to exclude wrinkles and air from a film at the time of being cut out. Measurement was performed 5 times on 10-sheet-overlapped samples, and an average value of 5-time measurements was divided by 10 to calculate the thickness.

Measurement of haze

The haze of a sample obtained by cutting a biaxially stretched polypropylene film into 50 mm$\times$100 mm was measured using a haze meter NDH-5000 manufactured by NIPPON DENSHOKU INDUSTRIES Co.,Ltd. The number of measurements was 3 and an average value thereamong was used.

Measurement of tensile elastic modulus

The tensile elastic modulus of the biaxially stretched polypropylene film was measured in the MD direction and the TD direction while conforming to JISK-7127 (1999) by using a sample having a shape conforming to a test piece type 2 (sample width 15 mm, sample length 190 mm), with a tensile tester (universal testing machine Tensilon RTG-1210 manufactured by A&D Company, Limited), under the conditions with 23°C, a test speed of 200 mm/min, and a distance between chucks of 100 mm. To measure the tensile elastic modulus in the MD direction, a test piece cut out with a length in the MD direction of 190 mm and a width in the TD direction of 15 mm was used, and to measure the tensile elastic modulus in the TD direction, a test piece cut out with a length in the TD direction of 190 mm and a width in the MD direction of 15 mm was used.

### (3) Evaluation of properties of capacitor element

Short-time voltage endurance test (evaluation of capacity reduction at high voltage loading)

The element was caused to stand still at a test environment temperature (25°C) for 1 hour or more in advance, and then the initial static capacitance before the test was evaluated with LCR HiTESTER 3522-50 manufactured by HIOKI E.E. CORPORATION. Next, the capacitor element was loaded with a voltage of DC 1300 V for 10 seconds using a high-voltage power source. The static capacitance of the element after the voltage loading was measured with the LCR tester, and the static capacitance changing rate before and after the voltage loading was calculated based on the following formula. The static capacitance changing rate was measured for three elements, and an average value was taken as a measured value. When the static capacitance changing rate is within $\pm 1\%$, it is evaluated that there is no problem in practical use, and when the static capacitance changing rate is within $\pm 0.5\%$, it is evaluated as better.

(Static capacitance changing rate) = [[(Static capacitance after voltage loading) - (Initial static capacitance)]/(Initial static capacitance)] $\times$ 100(%)

Step pressure-boosting voltage endurance test (evaluation of capacity reduction voltage at high temperature)

The element was preheated at a test environment temperature (115°C (assumed highest temperature +15°C)) for 1 hour or more in advance, and then the initial static capacitance before the test was evaluated with LCR HiTESTER 3522-50 manufactured by HIOKI E.E. CORPORATION. Next, the capacitor element was loaded with a voltage of DC 600 V for 1 hour in a high-temperature environment at 115°C using a high-voltage power source. After the voltage loading was ended and the element was cooled to room temperature (23°C), the static capacitance of the element was measured with the LCR tester, and the static capacitance changing rate before and after the voltage loading was calculated in accordance with the abovementioned formula for calculating the static capacitance changing rate. After the static capacitance of the element was measured, the test element was returned to a high-temperature environment to be preheated, and then loaded with a voltage of direct current 650 V for 1 hour using a high-voltage power source, and after the voltage loading was ended and the element was cooled to room temperature (23°C), the static capacitance of the element was measured to calculate the static capacitance changing rate. Thereafter, the test was continued by repeatedly boosting the voltage by 50 V until the capacity decreasing rate exceeded -0.5%. A voltage when the capacity decreasing rate exceeded -0.5% was evaluated as a capacity decreasing voltage. The capacity decreasing voltage was measured for three elements, and an average value was taken as a measured value. When the capacity decreasing voltage is 900 V or more, it is evaluated that there is no problem in practical use, and when the capacity decreasing voltage is 950 V or more, it is evaluated as better.

Table 1 shows the results of the abovementioned evaluations of properties in Examples and Comparative examples.

[Table 1]

|  |  |  | Example 1 | Example 2 | Example 3 | Example 4 | Example 5 | Example 6 | Example 7 | Comparative example 1 | Comparative example 2 |
|---|---|---|---|---|---|---|---|---|---|---|---|
| Ultrasonic wave propagation velocity in biaxially stretched polypropylene film |  | Average value (Km/sec) | 1.666 | 1.678 | 1.800 | 1.774 | 1.704 | 1.798 | 1.741 | 1.574 | 1.410 |
|  |  | Maximum value (Vmax) (Km/sec) | 2.701 | 2.466 | 2.610 | 2.649 | 2.758 | 2.704 | 2.549 | 2.355 | 2.390 |
|  |  | Minimum value (Vmin) (Km/sec) | 0.836 | 0.886 | 0.921 | 0.910 | 0.889 | 0.917 | 0.895 | 0.853 | 0.800 |
|  |  | Vmax/Vmin | 3.25 | 2.83 | 3.02 | 3.00 | 3.28 | 3.15 | 3.09 | 2.76 | 2.79 |
| Resin component | PP resin A and PP resin B | Content (mass%) | A1:B1 63:34 | A2:B1 65:35 | A2:B1 63:34 | A2:B1 64:35 | A2:B1 60:30 | A2:B1 63:34 | A2:B1 63:34 | A1:B2 65:35 | A1:B1 65:35 |
|  | Long-chain-branched PP resin (Resin C) | Resin C Content (mass%) | C1 3.0 | - | C1 3.0 | C1 1.0 | C1 10.0 | C2 3.0 | C3 3.0 | - | - |
|  |  | Melt tension (230°C) (g/cm$^3$) | 17 | - | 17 | 17 | 17 | 6 | 9 | - | - |
|  |  | Strain hardening parameter | 5.8 | - | 5.8 | 5.8 | 5.8 | 4.5 | 5.0 | - | - |
|  |  | MFR (230°C) (g/10min) | 2.8 | - | 2.8 | 2.8 | 2.8 | 8.0 | 2.9 | - | - |

EP 4 484 476 A1

(continued)

| | | | Example 1 | Example 2 | Example 3 | Example 4 | Example 5 | Example 6 | Example 7 | Comparative example 1 | Comparative example 2 |
|---|---|---|---|---|---|---|---|---|---|---|---|
| Properties of biaxially stretched polypropylene film | | Molecular weight distribution Mw/Mn | 8.5 | 6.3 | 6.5 | 6.5 | 7.2 | 6.5 | 6.8 | 7.8 | 8.7 |
| | | Z average molecular weight Mz | 122 | 110 | 111 | 110 | 130 | 115 | 112 | 101 | 120 |
| | | Weight fraction w (%) at Log (M) = 4.0 | 3.9 | 3.5 | 3.7 | 3.6 | 3.9 | 3.6 | 3.8 | 5.9 | 4.2 |
| Evaluation of biaxially stretched polypropylene film | Dielectric breakdown strength (V/$\mu$m) | Room temperature | 652 | 628 | 660 | 635 | 625 | 662 | 631 | 590 | 576 |
| | | 100°C | 581 | 629 | 640 | 631 | 610 | 648 | 629 | 580 | 529 |
| | | 125°C | 574 | 602 | 638 | 626 | 601 | 632 | 614 | 564 | 510 |
| | Volume resistivity (V/$\mu$m) | 100°C·1 minute value | 1.41E+15 | 1.98E+15 | 2.00E+15 | 1.95E+15 | 1.50E+15 | 2.14E+15 | 1.98E+15 | 1.30E+15 | 1.30E+15 |
| | Thickness ($\mu$m) | | 2.26 | 2.33 | 2.31 | 2.30 | 2.32 | 2.29 | 2.30 | 2.34 | 2.32 |
| | Haze (%) | | 2.1 | 2.2 | 2.5 | 2.4 | 2.6 | 2.2 | 2.0 | 2.5 | 1.9 |
| | Tensile elastic modulus (MPa) | MD | 3.5 | 2.9 | 3.6 | 3.8 | 4.1 | 3.6 | 3.3 | 3.1 | 3.3 |
| | | TD | 5.3 | 4.6 | 5.5 | 6.0 | 6.3 | 5.8 | 5.4 | 5.4 | 5.1 |
| Evaluation of capacitor element | Static capacitance changing rate (%) at high voltage loading | | -0.20 | -0.24 | -0.08 | -0.20 | -0.42 | -0.21 | -0.36 | -3.70 | -3.10 |
| | Capacity reduction voltage (V) at high temperatures | | 950 | 950 | 1000 | 950 | 900 | 1000 | 900 | 850 | 900 |

EP 4 484 476 A1

**Claims**

1. A biaxially stretched polypropylene film, wherein an average value of ultrasonic wave propagation velocities in an omni-direction at room temperature measured by using an ultrasonic wave orientation tester is 1.60 Km/sec or more.

2. The biaxially stretched polypropylene film according to claim 1, wherein a maximum value (Vmax) of the ultrasonic wave propagation velocities in the omni-direction at room temperature measured by using the ultrasonic wave orientation tester is 2.40 Km/sec or more.

3. The biaxially stretched polypropylene film according to claim 1 or 2, wherein a ratio (Vmax/Vmin) between the maximum value (Vmax) and a minimum value (Vmin) of the ultrasonic wave propagation velocities in the omni-direction at room temperature measured by using the ultrasonic wave orientation tester is 2.8 or more.

4. The biaxially stretched polypropylene film according to any one of claims 1 to 3, wherein the biaxially stretched polypropylene film comprises a long-chain-branched polypropylene resin, and the long-chain-branched polypropylene resin has a melt tension of 9 g/cm$^3$ or more and 20 g/cm$^3$ or less at 230°C.

5. The biaxially stretched polypropylene film according to any one of claims 1 to 3, wherein the biaxially stretched polypropylene film comprises a polypropylene resin and a long-chain-branched polypropylene resin, and the long-chain-branched polypropylene resin has a strain hardening parameter of 3 or more and less than 6.

6. The biaxially stretched polypropylene film according to any one of claims 1 to 3, wherein the biaxially stretched polypropylene film comprises a polypropylene resin and a long-chain-branched polypropylene resin, and the long-chain-branched polypropylene resin has a melt flow rate at 230°C of 1 to 6 g/10 min.

7. The biaxially stretched polypropylene film according to any one of claims 1 to 3, wherein a polypropylene resin constituting the biaxially stretched polypropylene film has a molecular weight distribution (Mw/Mn) between a weight-average molecular weight Mw and a number-average molecular weight Mn of 5.0 or more and 10.0 or less.

8. The biaxially stretched polypropylene film according to any one of claims 1 to 3, wherein a polypropylene resin constituting the biaxially stretched polypropylene film has a Z average molecular weight Mz of 0.950 million or more and 1.500 million or less.

9. The biaxially stretched polypropylene film according to any one of claims 1 to 3, wherein a polypropylene resin constituting the biaxially stretched polypropylene film has a weight fraction w, at a logarithmic molecular weight Log (M) = 4.0 in an integral molecular weight distribution curve, is 2.6% or more and 4.0% or less.

10. The biaxially stretched polypropylene film according to any one of claims 1 to 9, used for a capacitor.

11. A metallized film having a metal layer on at least one surface of the biaxially stretched polypropylene film according to any one of claims 1 to 10.

12. The metallized film according to claim 11, having a thickness of 1.8 μm or more and 3.0 μm or less.

13. A capacitor containing the metallized film according to claim 11 or 12.

Fig. 1

| INTERNATIONAL SEARCH REPORT | International application No. |
| | PCT/JP2023/002182 |

**A. CLASSIFICATION OF SUBJECT MATTER**

*C08J 5/18*(2006.01)i; *B29C 55/12*(2006.01)i; *B32B 15/085*(2006.01)i; *H01G 4/32*(2006.01)i
FI:  C08J5/18 CES; B29C55/12; B32B15/085 Z; H01G4/32 511L

According to International Patent Classification (IPC) or to both national classification and IPC

**B. FIELDS SEARCHED**

Minimum documentation searched (classification system followed by classification symbols)

C08J5/18; C08L; C08K; B29C55/12; B32B15/085; H01G4/32

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-100800 A (OJI HOLDINGS CORP) 02 July 2020 (2020-07-02) claims, paragraphs [0081]-[0084], [0120], [0128]-[0130], examples, tables 1-3 | 1-13 |
| X | WO 2021/162021 A1 (OJI HOLDINGS CORP) 19 August 2021 (2021-08-19) claims, comparative examples 3, 18, table 2-2 | 1-3, 7-13 |
| A | | 4-6 |
| A | WO 2020/217930 A1 (OJI HOLDINGS CORP) 29 October 2020 (2020-10-29) entire text | 1-13 |
| A | WO 2018/181938 A1 (OJI HOLDINGS CORP) 04 October 2018 (2018-10-04) entire text | 1-13 |
| A | WO 2014/024970 A1 (TOYOBO CO., LTD.) 13 February 2014 (2014-02-13) entire text | 1-13 |
| A | WO 2014/104089 A1 (TOYOBO CO., LTD.) 03 July 2014 (2014-07-03) entire text | 1-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 April 2023 | 18 April 2023 |

| Name and mailing address of the ISA/JP | Authorized officer |
|---|---|
| Japan Patent Office (ISA/JP) 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

International application No.

**PCT/JP2023/002182**

**C.    DOCUMENTS CONSIDERED TO BE RELEVANT**

| Category* | Citation of document, with indication, where appropriate, of the relevant passages | Relevant to claim No. |
|---|---|---|
| A | JP 2017-57247 A (JAPAN POLYPROPYLENE CORP) 23 March 2017 (2017-03-23)<br>entire text | 1-13 |
| P, A | WO 2022/107706 A1 (OJI HOLDINGS CORP) 27 May 2022 (2022-05-27)<br>entire text | 1-13 |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| JP | 2020-100800 | A | 02 July 2020 | US 2020/0377706 A1 claims, examples, tables 1-7 WO 2019/131815 A1 EP 3733743 A1 KR 10-2020-0098502 A CN 111566149 A | | | |
| WO | 2021/162021 | A1 | 19 August 2021 | EP 4105281 A1 claims, comparative examples 3, 18, table 2-2 CN 115087701 A KR 10-2022-0140496 A | | | |
| WO | 2020/217930 | A1 | 29 October 2020 | CN 113710734 A | | | |
| WO | 2018/181938 | A1 | 04 October 2018 | JP 2019-167512 A JP 2019-167513 A | | | |
| WO | 2014/024970 | A1 | 13 February 2014 | JP 2014-51658 A TW 201412778 A | | | |
| WO | 2014/104089 | A1 | 03 July 2014 | TW 201431916 A | | | |
| JP | 2017-57247 | A | 23 March 2017 | (Family: none) | | | |
| WO | 2022/107706 | A1 | 27 May 2022 | (Family: none) | | | |

International application No.

**PCT/JP2023/002182**

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 42929923 B

**Non-patent literature cited in the description**

- **T. HAYASHI et al.** *Polymer*, 1988, vol. 29, 138
- **KUNIHIRO OSAKI ; ASHITA MURAI ; NOBUO BESSHO ; BONG SHIK KIM**. *the journal of the Society of Rheology Japan*, 1976, vol. 4, 166